(19) Europäisches Patentamt
European Patent Office
Office européen des brevets

(11) **EP 3 743 823 B1**

(12) **EUROPEAN PATENT SPECIFICATION**

(45) Date of publication and mention
of the grant of the patent:
**24.08.2022 Bulletin 2022/34**

(21) Application number: **19702063.9**

(22) Date of filing: **25.01.2019**

(51) International Patent Classification (IPC):
**G06F 16/23** (2019.01)

(52) Cooperative Patent Classification (CPC):
**G06F 16/2393**

(86) International application number:
**PCT/EP2019/051865**

(87) International publication number:
**WO 2019/145480 (01.08.2019 Gazette 2019/31)**

(54) **RE-COMPUTING PRE-COMPUTED QUERY RESULTS**

NEUBERECHNUNG VORBERECHNETER ABFRAGEERGEBNISSE

RECALCUL DE RÉSULTATS D'INTERROGATION PRÉ-CALCULÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.01.2018 FR 1850581
25.01.2018 US 201815879654**

(43) Date of publication of application:
**02.12.2020 Bulletin 2020/49**

(73) Proprietor: **Amadeus S.A.S.
06410 Biot (FR)**

(72) Inventors:
• **AUBRY, Jean-Philippe
Brookline, Massachusetts 02446 (US)**
• **LE GRAND, Guillaume
06110 Le Cannet (FR)**
• **MARCHI, Johann
06000 Nice (FR)**
• **LEGRAND, Nicolas
06300 Nice (FR)**

(74) Representative: **Samson & Partner Patentanwälte
mbB
Widenmayerstraße 6
80538 München (DE)**

(56) References cited:
**EP-A1- 2 913 764        US-A1- 2005 234 971
US-A1- 2014 280 028**

• **SANJAY KRISHNAN ET AL: "Stale view
cleaning", PROCEEDINGS OF THE VLDB
ENDOWMENT; [ACM DIGITAL LIBRARY],
ASSOC. OF COMPUTING MACHINERY, NEW
YORK, NY, vol. 8, no. 12, 1 August 2015
(2015-08-01) , pages 1370-1381, XP058072809,
ISSN: 2150-8097, DOI: 10.14778/2824032.2824037**

**Description**

FIELD OF THE INVENTION

The present invention generally relates to database technology. More specifically, it is directed to re-computing pre-computed search results stored as database records.

BACKGROUND

A common problem in database technology is to ensure short response times to database queries or requests which require complex, long and resource-intensive processing, e.g. due to large volumes of data. For example, such computing-power consuming processing has to be performed in response to so-called "open queries" which contain only little input information (e.g. only one or two parameters out of a dozen possible parameters are specified and/or the specified value ranges of the parameters are broad) and, consequently, lead to a large number of results in general. Possibilities to speed up data processing by increasing hardware performance are limited. Thus, attention is drawn to improving the mechanisms underlying the complex, long and resource-intensive processing in order to respond to such queries.

One general approach to shorten response times is to prepare results to be returned in response to expected requests (e.g. by pre-computing or pre-collecting such results) and to maintain the corresponding query results in a pool of pre-computed query results. Requests are then actually not processed and responses on the basis of the large original data basis, but are directed to the pool of pre-computed query results.

Re-computing a large number of pre-computed query results is a task consuming a substantial amount of computation resources. Thus, re-computation mechanisms are sought to efficiently perform the re-computation of pre-computed query results.

EP 2913764 relates to re-computing pre-computed search results where the computation resources needed to re-compute a pre-computed search result i generally depend on whether or not other pre-computed search results related to the pre-computed search result i are re-computed during the same computation cycle. Thus, the computation resources to re-compute the pre-computed search results are thus not static, but vary with the selection of the set of pre-computed search results to be re-computed during the computation cycle. EP 2913764 proposes an iterative estimation process according to which a re-computation controller iteratively selects a number of the pre-computed search results to be re-computed by the computation platform during a given time interval forming a re-computation cycle. The number of pre-computed search results is limited by the computation resources available during the given time interval. After initializing the computation resources $c_i$ needed to re-compute each pre-computed search result i with a value assuming computation of i independent from the computation of other pre-computed search results selected for re-computation during the given time interval, a first portion of the pre-computed search results is selected for re-computation in a first selection iteration,, wherein this first selected portion only requires a percentage below 100% of the overall computation resources available for re-computation within the given time interval. The computation resources $c_i$ needed to re-compute each pre-computed search result i are then re-assessed by taking into account which pre-computed search results related to the pre-computed search result i have been selected for re-computation. Further iterations of selecting further not-yet-selected portions of pre-computed search results and re-assessing the computation resources $c_i$ needed to re-compute each pre-computed search result i are then done if less than 100% of the overall computation resources available for re-computation within the given time interval is exhausted.

SUMMARY

According to a first aspect as set forth by claim 1, a method for re-computing pre-computed query results stored at a database server is provided. The pre-computed query results are composed of a plurality of shares. Each share includes a certain number of pre-computed query results. The computation resources of a computation machine needed to re-compute a pre-computed query result of a first share depend on whether or not other pre-computed query results of the first share are re-computed during a given time interval. The given time interval forms a current re-computation cycle. The method comprising at a computation machine to receive a request to re-compute pre-computed query results of at least a first share. The method further determines a number of pre-computed query results in the first share to be re-computed in the current re-computation cycle based on a Reinforcement Learning algorithm. The determined number of pre-computed search results is limited by the computation machine's computation resources available during the given time interval. The method further re-computes the determined number of pre-computed query results in the first share.

According to a second aspect as set forth by claim 13, a computation machine for re-computing pre-computed query results stored at a database server, wherein the pre-computed query results are composed of a plurality of shares, wherein each share includes a certain number of pre-computed query results, wherein computation resources of a computation machine needed to re-compute a pre-computed query result of a first share depend on whether or not other pre-computed query results of the first share are re-computed during a given time interval forming a current re-computation cycle, the computation machine being arranged to receive a request to re-compute pre-computed query results of at least a first share. The computation machine is further arranged to determine a number of pre-computed query results in the first share to be recomputed in the current re-computation cycle based on a Reinforcement Learning algorithm by the determined number of pre-computed query results being limited by the comutation machine's computation resources available during the given time interval. The computation machine is further arranged to re-compute the determined number of pre-computed query results in the first share during the re-computation cycle.

According to a third aspect, a computer program stored on a storage medium is provided which, when executed by a computer, equips the computer to execute the methodology set forth in the first aspect.

The invention is set out in the appended independent claims.

Further optional aspects are set forth by the dependent claims.

## BRIEF DESCRIPTION OF THE FIGURES

The present invention will be described with reference to accompanying figures. Similar reference numbers generally indicate identical or functionally similar elements.

FIG. 1 schematically schematically depicts an example of a distributed database system maintaining pre-computed query results.

FIG. 2 visualizes an effect of decreasing validity probability of pre-computed query results over time.

FIG. 3 illustrates varying computation resources which are necessary to re-compute different exemplary shares of pre-computed query results.

FIG. 4 is a more detailed schematic re-computation system as described herein.

FIG. 5 shows the basic elements of a Reinforcement Learning system.

FIG. 6 illustrates two examples of an aggregated key performance indicator calculation.

FIG. 7 shows an example of a value function update.

FIG. 8 is a schematic flow chart with high-level processes executed by the computation machine and its sub-systems described herein.

FIG. 9 illustrates an iterative and Reinforcement Learning-based approach to determine an optimal number of pre-computed query results to be re-computed during a computation cycle.

FIG. 10 is an exemplary schematic view of the internal architecture of the database table and/or a request client.

## DETAILED DESCRIPTION

The functionalities described herein relate to all of the aspects: method, computation machine, computer program product and computer program stated in the summary.

In order to be able to handle database queries or batch computation requests which require computations on the basis of large volumes of underlying data, search results corresponding to expected queries are generally pre-computed and stored as database records in a database. This database is queried by requesting entities (such as clients, applications, browsers installed on user terminals, etc.) in the course of a search and pre-computed search results fulfilling search criteria indicated by the query are returned to the client in response to the query. Subsequently, the term "query" is used as a general term including any type of information retrieval requests such as transactional queries, requests for batch computations and other forms.

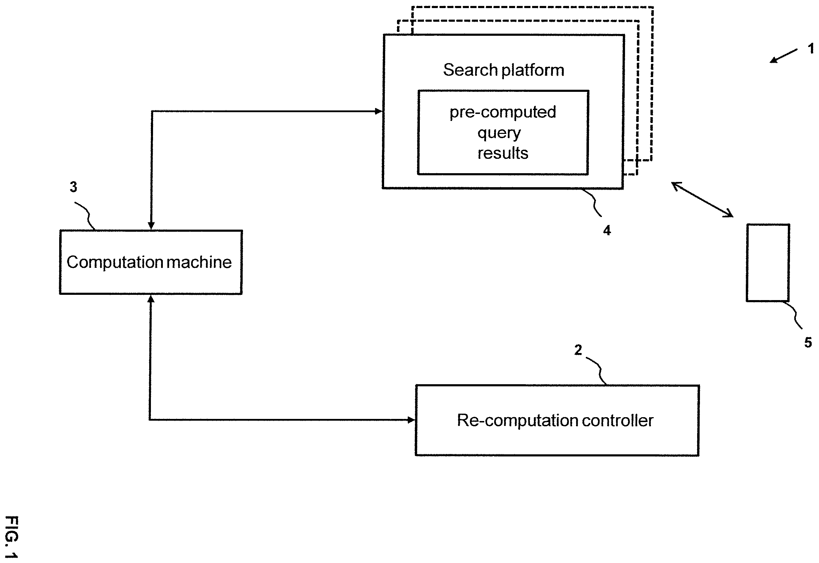

FIG. 1 illustrates such a database environment 1 on an abstract level. Basic data, hereinafter also referred to as "calculation data", is kept in and/or accessed by a computation machine 3 which is connected to a re-computation controller 2. The latter one issues re-computation orders to the computation machine 3 which, in turn, transmits the corresponding results to the search platform 4 and, in addition, to the re-computation controller 2 which also maintains the pre-computed search results for reasons of re-computation control. End users 5 such as applications on user terminals access the pre-computed search results from the search platform 4. As indicated by FIG. 1, one or several search platforms 4 may be present in environment 1. If a plurality of search platforms 4 is present, the pre-computed search results may be maintained in a distributed manner over the several search platforms 4 and re-computation controller 2 may control the re-computation of all pre-computed search results distributed over search platforms 4. The search platform 4 may also offer a heterogeneous set of pre-computed search requests, e.g. some search platforms 4 maintain pre-computed search requests relating to air travel, other search platforms 4 stored pre-computed search request related to insurances and other search platforms 4 keep pre-computed (or pre-crawled) search requests related to Internet websites. Such a heterogeneous environment may be controlled by one single re-computation controller 2 or by a plurality of re-computation controllers 2. Alternatively, the plurality of search platforms 4 may be utilized to mirror the same pre-computed search results, for example, for reasons of redundancy.

The approach of pre-computing search results and storing them in the search platform accessible to querying clients leads to the general situation that the calculation data may change over time and, thus, the pre-computed search results get outdated or invalid (both terms are used synonymously herein). Pre-computed search results which are still up-to-date, i.e. which match the corresponding real-time computation equivalents (results which would be actually computed on demand without having pre-computed search results available), are called "accurate" pre-computed search results hereinafter. Thus, when the search platform keeping the pre-computed search results correctly represents the current state of the data domain underlying the cached query results, i.e. the calculation data, the pre-computed search results stored in the search platform are - in general - accurate.

Generally, to enable the search platform to return correct results, one wants to maintain a high degree of correlation between pre-computed search results which are provided to the querying entity in response to database queries and their real-time computation equivalents. At the same time, however, it is desirable to minimize computation resource consumption caused by re-computations, i.e. to avoid any unnecessary re-computations such as re-computation of still accurate cached query results. Computing resources are limited and, generally, there are not enough computing resources to re-compute all pre-computed search results at all times. Thus, a trade-off between pre-computed query results accuracy and utilization of the available computing power is to be found.

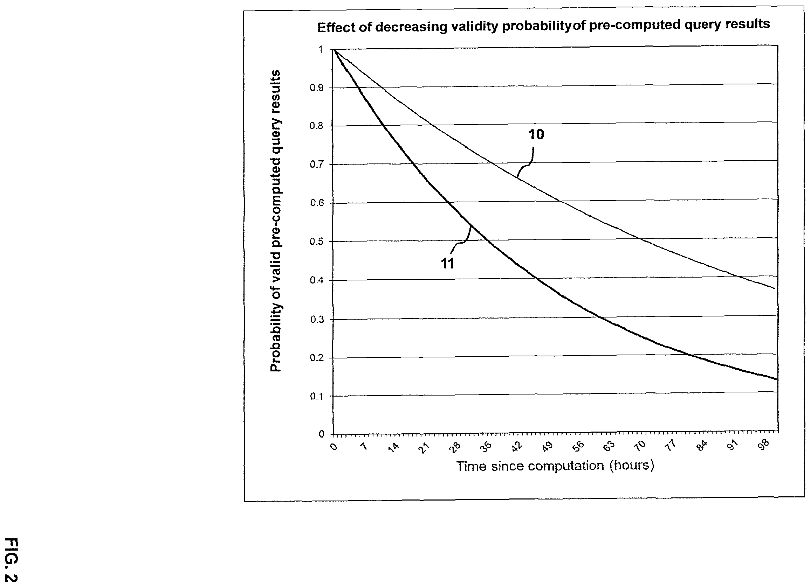

In order to render re-computation more efficient, metrics are defined to evaluate how "necessary" or "unnecessary" a re-computation is. For instance, it is not worth reshooting an entire massive pre-computation every day if less than half of the computed query results turn out to be outdated. On the other hand, if particular classes of query results are known to change frequently, re-computing them several times per day might be beneficial for the accuracy. Consequently, an effective way of assessing or estimating search result accuracy is needed, generally taking into account both the associated gain on accuracy and the cost of re-computation. To this end, some mechanisms model the decreasing validity of pre-computed query results over time. Two exemplary functions of this probable accuracy decreasing over time are depicted by FIG. 2. Function 10 represents a pre-computed search result which potentially remains more accurate (or, more correctly, stays at a higher probability of being valid over time) than another pre-computed search result associated with function 11. For example, the pre-computed search result represented by function 10 has 70% probability of being still valid at 35 hours after its last re-computation, while the other pre-computed search result characterized by function 11 is only valid up to about 50% at 35 hours after its latest re-computation. Functions 10 and 11 may also represent whole sets of pre-computed search results and then indicate proportions of the sets of pre-computed search results likely being valid at a time passed since the last re-computation of the set.

Often, considerations of re-computing pre-computed query results assume that re-computation of any pre-computed search result by the computation machine 3 requires substantially the same amount of computation resources irrespective of whether the pre-computed search results are computed separately, together with related pre-computed query results (e.g. same origin, destination and adjacent dates) or any other unrelated query results. In practice, however, this assumption cannot be made in general because, for example, certain pre-computed query results and/or their corresponding underlying calculation data are interrelated to each other. Re-computing such interrelated pre-computed query results together (i.e. within the same re-computation cycle) could include synergetic effects and may thus be more efficient than re-computing them separately. Thus, when interrelated pre-computed query results are re-computed together the computation costs per individual pre-computed query result is generally less than the computation cost per individual pre-computed query result required if they are re-computed separately, i.e. in different re-computation cycles.

To promote understanding of interrelated pre-computed search results, a particular example is given next. This example originates from a particular application of the distributed database environment 1 in the travel industry, i.e. the database 4 keeps travel-related pre-computed search results and makes them available to end users. The following example, however, is not supposed to limit the issue of interrelated pre-computed search results such a travel data application. Rather, similar or analog conditions allowing a synergetic and therefore more efficient re-computation of interrelated pre-computed search results are present in database systems independent from the content of pre-computed data sets. In general, it can be said that any process of re-computing pre-computed search results will aim at a mutualization of re-computation sub-tasks that have to be executed commonly for any pre-computed search result of a set of pre-computed search results. Thus, re-computing pre-computed search results together that have such re-computation sub-tasks in common is generally favorable over re-computing pre-computed search requests together which do not share similar re-computation sub-tasks.

In a particular embodiment, the pre-computed search requests are round-trip flight data records, each specifying a travel origin and destination and a departure and arrival date (or, alternatively to the arrival date, a stay duration relating to the departure date). In this example, the database 4 contains pre-computed round-trip travel recommendations for any origin-destination pair and any departure-arrival-date pair to be covered. Table 1 indicates a small excerpt from the pre-computed travel recommendations kept in database 4, the excerpt being travel recommendations for the city pair Nice-Boston ("NCE-BOS") and for departure dates from 1st July to 5th July with maximum stay duration of five days, the abbreviation "pc-fr x" standing for "pre-computed travel recommendation number x".

Table 1

| NCE-BOS | Dep JUL 1. | Dep JUL 2. | Dep JUL 3. | Dep JUL 4. | Dep JUL 5. |
|---|---|---|---|---|---|
| Ret JUL 2. | pc-fr 0 | -- | -- | -- | -- |
| Ret JUL 3. | pc-fr 1 | pc-fr 5 | -- | -- | -- |
| Ret JUL 4. | pc-fr 2 | pc-fr 6 | pc-fr 10 | -- | -- |
| Ret JUL 5. | pc-fr 3 | pc-fr 7 | pc-fr 11 | pc-fr 15 | -- |
| Ret JUL 6. | pc-fr 4 | pc-fr 8 | pc-fr 12 | pc-fr 16 | pc-fr 20 |
| Ret JUL 7. | -- | pc-fr 9 | pc-fr 13 | pc-fr 17 | +pc-fr 21 |
| Ret JUL 8. | -- | -- | pc-fr 14 | pc-fr 18 | pc-fr 22 |
| Ret JUL 9. | - | - | - | pc-fr 19 | pc-fr 23 |
| Ret JUL 10. | -- | -- | -- | -- | pc-fr 24 |

The re-computation of a particular pre-computed travel recommendation, for example pc-fr 9 relating to a departure date of 2nd July and a return date of 7th July, is roughly performed by the computation machine 3 by the following sub-tasks:

1: Retrieve the possible geographic routes between Nice and Boston including intermediate stops/change, for example: Nice-Paris-Boston, Nice-London-Boston, Nice-New York-Boston, Nice-Paris-New York-Boston, etc.

2: Find all the possible flights on all the routes retrieved by activity 1: for example, Air France 123 and Emirates 7123 on the leg Nice-Paris, Air France 456 and American Airlines 564 and United Airlines 125 on the leg Paris-New York, etc.

a. This activity is performed for the outward part of the travel on the departure date 2nd Jul (sub-task 2a) and
b. for the return part of the travel on the return date 7th July (sub-task 2b) because flights are generally not available on all days.

3: Check the availability on all the flights determined by activities 2a and 2b, i.e. on 2nd Jul for the outbound part of the journey (= sub-task 3a) and on 7th Jul for the return part of the journey (= sub-task 3b).

4: Retrieve fares that can be applied to these flights on these dates. A typical fare is rule which yields a price for the whole journey. However, fares may also be valid for the outbound and for the inbound part of the journey on their respective dates in which case they can be retrieved once for the outbound part (= sub-task 4a) and once for the return part of the journey (= sub-task 4b). Fares have restrictions on the departure dates, on the return dates, on the flights to be applied on, and many others. Fares can be combined together, discounted in some specific cases and so on.

5: The best solution, i.e. the connection with the best price, is kept, returned by the computation machine 3 and stored by the database 4 as pc-fr 9.

These sub-tasks are performed in a similar fashion for any pre-computed travel recommendation. When performing the re-computation for the whole set of pre-computed travel recommendations (pc-fr 0 to pc-fr 24), several re-computation sub-tasks can be mutualized. Executing sub-task 1 is necessary only once for the whole set of pre-computed travel recommendations pc-fr 0 to pc-fr 24 because all these pre-computed travel recommendations belong to the same origin-destination city pair Nice-Boston. Thus, sub-task 1 does not need to be re-done for every pre-computed search result pc-fr 0 to pc-fr 24.

The sub-tasks 2a, 3a and sub-task 4 are, on the other hand, specific to one departure date. They can therefore be re-used for all pre-computed travel recommendations relating to one and the same departure date. Table 2 indicates this for the pre-computed travel recommendations pc-fr 5 to pc-fr 9 relating to the departure date of 2nd July:

Table 2

| NCE-BOS | Dep JUL 1. | Dep JUL 2. | Dep JUL 3. | Dep JUL 4. | Dep JUL 5. |
|---|---|---|---|---|---|
| Ret JUL 2. | pc-fr 0 | -- | -- | -- | -- |
| Ret JUL 3. | pc-fr 1 | | -- | -- | -- |
| Ret JUL 4. | pc-fr 2 | | pc-fr 10 | -- | -- |
| Ret JUL 5. | pc-fr 3 | Common Sub-tasks: 2a, 3a, 4a | pc-fr 11 | pc-fr 15 | -- |
| Ret JUL 6. | pc-fr 4 | | pc-fr 12 | pc-fr 16 | pc-fr 20 |
| Ret JUL 7. | -- | | pc-fr 13 | pc-fr 17 | pc-fr 21 |
| Ret JUL 8. | -- | -- | pc-fr 14 | pc-fr 18 | pc-fr 22 |
| Ret JUL 9. | -- | -- | -- | pc-fr 19 | pc-fr 23 |
| Ret JUL 10. | -- | -- | -- | -- | pc-fr 24 |

Likewise, the sub-tasks 2b, 3b and 4b are specific to one return date and, thus, are commonly performed for pre-computed travel recommendations relating to one and the same return date. This is illustrated by table 3 for the pre-computed travel recommendations pc-fr 9, pc-fr 13, pc-fr 17 and pc-fr 21, all of which refer to the return date of 7th July:

Table 3

| NCE-BOS | Dep JUL 1. | Dep JUL 2. | Dep JUL 3. | Dep JUL 4. | Dep JUL 5. |
|---|---|---|---|---|---|
| Ret JUL 2. | pc-fr 0 | -- | -- | -- | -- |
| Ret JUL 3. | pc-fr 1 | pc-fr 5 | -- | -- | -- |
| Ret JUL 4. | pc-fr 2 | pc-fr 6 | pc-fr 10 | -- | -- |
| Ret JUL 5. | pc-fr 3 | pc-fr 7 | pc-fr 11 | pc-fr 15 | -- |
| Ret JUL 6. | pc-fr 4 | pc-fr 8 | pc-fr 12 | pc-fr 16 | pc-fr 20 |
| Ret JUL 7. | -- | Common Sub-tasks: 2b, 3b, 4b | | | |
| Ret JUL 8. | -- | -- | pc-fr 14 | pc-fr 18 | pc-fr 22 |
| Ret JUL 9. | -- | -- | -- | pc-fr 19 | pc-fr 23 |
| Ret JUL 10. | -- | -- | -- | -- | pc-fr 24 |

Thus, in summary, only a part of sub-task 4, namely retrieving such fares which are not valid for the whole outbound part of the travel and for the whole return part of the travel, but are specific for sub-sets or particular travel recommendations, has to be performed separately for each pre-computed travel recommendation, while the other sub-tasks can be performed in common for all pre-computed travel recommendations relating to the same origin-destination city pair (true for sub-task 1) or at least for pre-computed travel recommendations relating to the same departure date (sub-tasks 2a, 3a and 4a) or to the same return date (sub-tasks 2b, 3b and 4b). Consequently, the more pre-computed travel recommendations relate to one origin-destination city pair and the more pre-computed travel recommendations relate to one departure date and return date, respectively, the more computation resources can be spared by mutualizing these sub-tasks across the respective pre-computed flight requests.

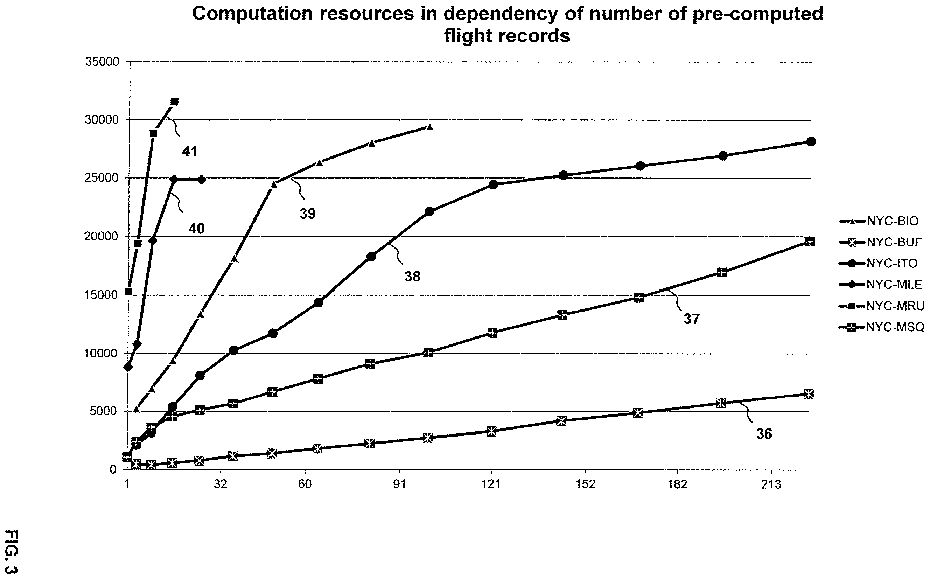

This relationship between increasing synergetic effects with an increasing number of pre-computed travel recommendations relating to an origin-destination city pair and to one departure or return date is also visualized by FIG. 3. FIG. 3 shows six graphs of exemplary pre-computed travel recommendation sets, each set belonging to one origin-destination city pair and forming an example of a share of pre-computed query results as used herein. In decreasing number of pre-computed travel recommendations being associated with a city pair, graph 36 relates to the city pair New York-Buffalo, graph 37 to New York-Minsk, graph 38 to New York-Hilo on Hawaii, graph 39 to New York-Bilbao, graph 40 to New York-Male and, finally, graph 41 to New York-Mauritius. The X axis of the diagram of FIG. 3 denotes the number of pre-computed travel recommendations, while the Y axis plots a measure of re-computation resources needed to perform a re-computation of pre-computed travel recommendations, namely CPU time.

On the one hand, FIG. 3 shows that re-computation of some pre-computed travel recommendation sets requires more computation resources than others. For example, re-computing pre-computed travel recommendations from set 41 including pre-computed travel recommendations for flights between New York and Mauritius is generally costlier than re-computing pre-computed travel recommendations from set 36 including pre-computed travel recommendations for flights between New York and Buffalo. This general difference of the amount of computation resources needed for re-computing pre-computed travel recommendations is taken into account by the including the re-computation costs C into the re-computation indicator as it has been explained in detail above. However, the graphs of FIG. 3 also indicate that the re-computation costs vary with the number of pre-computed travel recommendations of a set being re-computed. In general, the more pre-computed travel recommendations relating to one set are re-computed together, the less computation resources are needed to re-compute each pre-computed travel recommendation. For example, graph 36 indicates that re-computing 32 pre-computed travel recommendations of the set New York-Buffalo requires about 1000 ms of CPU, i.e. about 31.25 ms of CPU per pre-computed travel recommendation, while re-computing 170 pre-computed travel recommendations requires about 5000 ms of CPU, i.e. only about 29.4 ms of CPU per pre-computed travel recommendation. With respect to graph 38 relating to the city pair New York-Hilo, re-computing 35 pre-computed travel recommendations from that set requires about 10,000 ms of CPU, i.e. 286 ms of CPU per pre-computed travel recommendation, while re-computing 140 pre-computed travel recommendations from that set requires about 25,000 ms of CPU, i.e. only 178.5 ms of CPU per pre-computed travel recommendation, Hence, it is clear that the pre-computed travel recommendations belonging to one origin-destination city pair (the present example of a share) are interrelated in terms of computing resources required for their re-computation as explained above.

In other words, the computation resources needed to re-compute a pre-computed search result i generally depend on whether or not other pre-computed search results related to the pre-computed search result i are re-computed during the same computation cycle. Thus, the computation resources to re-compute the pre-computed search results are not static, but vary with the selection of the set of pre-computed search results to be re-computed during the computation cycle.

Hence, a mechanism for dynamically determining an optimal number of pre-computed query results of a share to be re-computed during a computation cycle (briefly referred as "re-computation number" hereinafter) to optimize efficient utilization of re-computation resources is sought. At the same time, the mechanism should minimize wasting computation resources due to re-computing pre-computed query results which are still valid and do not need any re-computation. Furthermore, the mechanism should not compromise stability of the computation machine 3, but ensure its robustness.

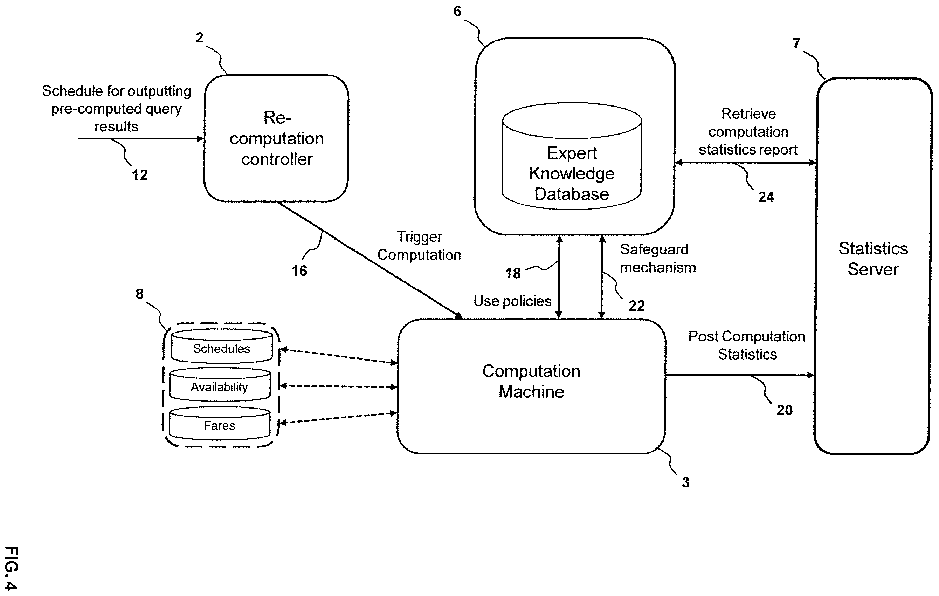

It is proposed to supplement the system 1 of FIG. 1 with an additional module hereinafter referred to as computation self-tuning sub-system 6 (FIG. 4). The function of the computation self-tuning sub-system 6 is to automatically and autonomously determine and fine-tune the number of interrelated pre-computed query results which are to be computed in order to re-compute more pre-computed search results with the same computation resources. To fulfil this function, the computation self-tuning sub-system 6 incorporates an expert knowledge database and is coupled to two further sub-systems, namely

- to the computation machine 3 to which the computation self-tuning sub-system 6 provides an optimal (set of) number of pre-computed search results to be re-computed for a given re-computation request from the re-computation controller 2. In terms of functionality, the computation self-tuning sub-system 6 can be considered to form a part of the computation machine 3.
- a statistics server 7 that acts as a statistics provider to refine the internal knowledge database of the computation self-tuning sub-system 6.

The re-computation controller 2 regularly triggers re-computation of pre-computed query results by sending 16 re-computation requests (possibly based on re-computation schedules 12) to the computation machine 3. For example, at some point of time, the re-computation controller 2 decides to re-compute one or more particular shares of pre-computed query results (also referred to as the "at least one first share") and triggers a re-computation of these one or more shares. Each time the re-computation controller 2 requests 16 re-computation of certain pre-computed query results during a new computation cycle, the computation machine 3 retrieves relevant data from the self-tuning sub-system 6 to decide the policy to determine the number of pre-computed query results to be re-computed in the respective shares of pre-computed query results. A safe-guard mechanism process 22 provides a certain quality of the decision of the number of pre-computed query results to be re-computed which may lead to a potential dynamic realignment of the decision at the current instance and over time. An asynchronous process 24 collects from the statistics server sub-system 7 the statistics data from past re-computations (which have been posted 20 to the statistics server sub-system 7) to fine-tune the decisions over time. The re-computations of the computation machine 3 itself are based on further computation data, in the example of FIG. 4 flight or travel schedules, availability data and fares, stored in database system 8. Note that this is a non-limiting example of the distributed database system. The mechanism presented herein is applicable to all use-cases of pre-computing or caching query results where the pre-computation or caching involves synergies between inter-related query results in the manner exemplarily set out above in detail with respect to FIGS. 2 and 3.

There is no existing model that could be readily used to attribute an optimal re-computation number to a given share of pre-computed query results in order to re-compute the pre-computed query results of the share during a computation cycle. On the one hand, the synergistic effects of re-computing a number of related pre-computed query results depend on the specific use-case of the database system and the characteristics of the pre-computed query results in terms of their interrelation and decreasing validity over time. On the other hand, the optimal number of related pre-computed query results to be re-computed also depends on the re-computation strategy employed (e.g. always re-compute pre-computed query results with the least probability of being up-to-date). Furthermore, options may be included in computation triggers 16 from the re-computation controller 2 which have an - a priori unkown - influence which pre-computed query results may be more important to be valid/accurate than others.

In order to address these bars, it is therefore generally proposed herein to utilize a learning algorithm which dynamically optimizes the decision of the number pre-computed query results to be re-computed during a computation cycle over time, independent from the a priori unknown influences mentioned before. However, it does not seem possible to use a standard supervised learning algorithm, i.e. an algorithm that is solely based on the knowledge of an expert such as a Neural Network, since there is no knowledge of which re-computation number is optimal for a given share of pre-computed query results. Such algorithms would require to be trained on a database associating computation triggers 16 from the re-computation controller 2 with their best respective re-computation number for each share to be re-computed. However, the required expert knowledge is generally not available.

Another way to build this database would be to use a brute force approach to permute all possible re-computation numbers for a given computation trigger 16 from the re-computation controller 2. This could yield a determination which re-computation number is the most appropriate to the computation trigger 16. However, this approach has several drawbacks, as it would take a lot of time and hardware to gather all these statistics. Furthermore, this only establishes static re-computation numbers and there could therefore be discrepancies between current status of this database and the moment it is employed by the computation machine 3. This would expose the overall system 1 (FIG. 1) to a potential rise of technical rejects, i.e. failure states caused by computation triggers 16 from the re-computation controller 2, in case of changes of the pre-computed query results.

As a consequence, it is proposed to train the learning algorithm continuously in the course of processing each computation trigger 16 from the re-computation controller 2. An algorithm driven by trial and error appears to be suitable which rates the result of a decision of the re-computation number in response to receiving a computation trigger 16. The rating could, for example, utilize thresholds of a number of key performance indicators to judge the quality of the decision. Algorithms from the Reinforcement Learning family seem to be the most suited to this task.

Hence, the computation machine 3 is enhanced with the self-tuning module 6 implementing a Reinforcement Learning algorithm to determine an optimum number of pre-computed query results in a share to be re-computed during a computation cycle. More specifically, the computation machine 3 receives a request 16 to re-compute pre-computed query results of at least a first share. The computation machine 3, more specifically its self-tuning sub-system 6, determines a number of pre-computed query results in the first share to be re-computed in the current re-computation cycle based on a Reinforcement Learning algorithm. The determined number of pre-computed search results are limited by the computation machine's computation resources available during the given time interval. The computation machine 3 then re-computes the determined number of pre-computed query results in the first share during the computation cycle.

In some embodiments, the RL learning algorithm described herein considers key performance indicators (KPIs) and examines impacts of respective decisions of the number pre-computed query results to be re-computed during a computation cycle on the KPIs. Expert knowledge may be used to determine e.g. which options of computation triggers 16 from the re-computation controller 2 do not have an influence on the KPIs - this can be used to reduce the dimensionality of the learning space.

In some embodiments, the KPIs include one or more of the following factores: sum of numbers of pre-computed query results to be re-computed, elapsed time of re-computing the pre-computed query results to be re-computed in the given time interval, maximum computation resources to re-compute pre-computed query results indicated in the request, and maximum of memory required to re-compute pre-computed query results indicated in the request. In some embodiments, the values of the KPIs are aggregated to an aggregated value of KPIs as explained in more detail below. In some embodiments, the KPI may be hierarchically defined, with more general KPIs being composed of a number of more specific KPIs. This allows a fine-grained assessment of the technical effect, i.e. an efficient usage of computation resources due to an optimal number of pre-computed query results selected for re-computation. KPI aggregation is then at each hierarchy level, where the number of more specific KPIs are aggregated to form the more general KPI and the more general KPIs are aggregated to establish a common reward value for a certain action, as explained in more detail further below.

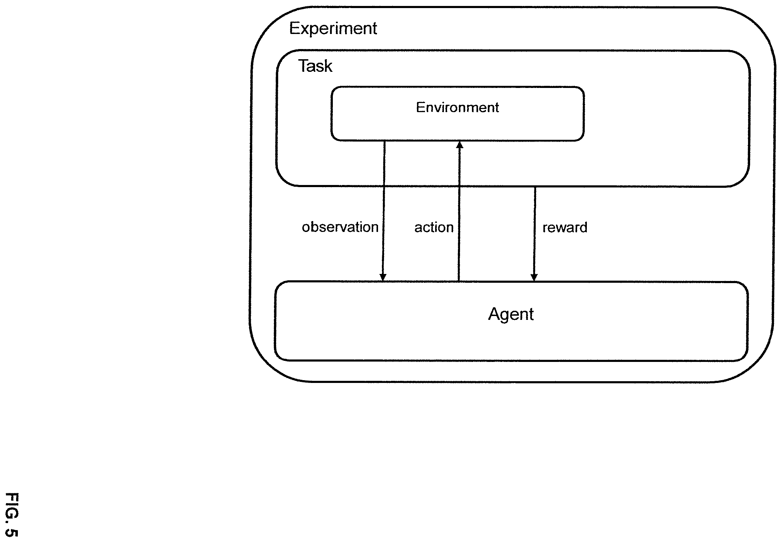

Before we turn to more detailed design options for a RL algorithm to solve the above-mentioned technical problem, we first give an overview of some concepts of RL. Reinforcement Learning mechanisms are also described, for example, by the textbook "Reinforcement Learning" by Richard S. Sutton and Andrew G. Barto, published by the MIT Press in 1998. RL mechanisms utilize state-of-the-art terms having an established meaning and are used herein in this established meaning to describe the algorithm for determining an optimal re-computation number, including (see FIG. 5):

- agent: the module that learns and makes decisions, the computation machine 3 with the self-tuning sub-system 6 that defines the re-computation numbers.
- environment: all facts outside the agent with which the agent interacts at each of a sequence of discrete points in time. The environment influences decisions by the agent and is influenced by the agent's decisions.
- task: a complete specification of an environment, one instance of the reinforcement learning problem.
- observation: determination of a state of the environment at a discrete point in time. Herein, the state comprises various parameters such as content of the computation trigger request 16 (indication of one or more shares to be re-computed and possibly further re-computation options), re-computation status (has the computation successfully ended?), KPIs of the re-computation (how well did the computation end, more specifically: CPU costs, memory consumption, etc.).
- action: decision taken by the agent from a set of actions available in the current state of the environment. Herein: determine the number of pre-computed query results of one of more shares to be re-computed during the current computation cycle.
- policy: mapping from the states of the environment to probabilities of selecting each possible action.
- reward function: function determining a reward to each action selected by the agent. Herein, the reward function uses KPI thresholds. For example, an action that causes a technical reject from the environment will yield a bad reward. In some embodiments, the reward function attributes a value to an action taken by the self-tuning sub-system 6 based on the aggregated KPIs retrieved from the statistics server 7.
- value function: a table that associate a set of actions with their estimated reward.

The goal of the agent is to maximize the rewards not immediate, but in the long run.

A general feature of RL is the trade-off between exploration and exploitation:

- In exploration mode, the agent tries out new kinds of actions to see how effective they are. The effectiveness of an action is immediately given by the reward returned to the agent in response to the selected action.
- In exploitation mode, the agent makes use of actions that are known to yield a high reward using of the history of rewards derived from the value function. More specifically, during each exploitation phase, the re-computation number is determined that is, according to expert knowledge database, currently known to yield the most rewards. The aim is to maximize the rewards on the long run (mathematically, this means that the sum of all rewards on an infinite lifespan is maximized). Generally spoken, in exploitation mode, the algorithm tries to make profit of what it has learned, whereas the exploration mode can be considered as an "investment" to look for other oppor-tunities to further optimize the determination of the re-computation number.

The agent continuously learns in exploration and in exploitation mode from its environment. However, exploration and exploitation should be balanced. Too strong a focus on either exploration or exploitation will yield poor results. The agent may explore to discover new strategies that could potentially yield a very high reward, but exploring too much may be dangerous because the agent never uses its knowledge of the environment. A strategy to balance these two modes to solve the particular technical problem discussed herein will be presented further below.

Some particularities of the reward function design to implement the computation machine 3 with the self-tuning sub-system 6 are described next. The main issue that should be avoided are technical rejects, i.e. failure states of the computation machine 3 caused by an inappropriate re-computation number which results in a rejection message to a computation trigger 16. Hence, a high penalty is attributed to the agent in such a case.

On the other hand, the agent should not over-react. It is possible to have instabilities of the computation machine 3 which could generate technical rejects and which are not due to the actions taken by the agent. To this end, in some embodiments, the re-computation numbers which ended in technical rejects (RcNbTR) are related to the re-computation numbers that did not end in a technical reject (RcNbOK). Hence, in some embodiments, the first term of the reward function is defined with the following formula:

$$PENALTY_{TR}\left(\frac{RcNbTR}{RcNbOK}\right)$$

with $PENALTY_{TR}(X) = exp(X)$, i.e. an exponential function.

Furthermore, a set of KPI thresholds is utilized in some embodiments. These KPI thresholds are limits that should not be exceeded by the actions of the agent. Therefore, these KPI thresholds should be wisely determined e.g. with the help of domain experts of the system 1 (FIG. 1), depending on the particular use-case of the system 1.

In order to increase safe actions by the agent, an additional level of safety is taken in some embodiments. The threshold is taken as a given percentage of the actual threshold from which a technical reject would actually be generated ("hard threshold"). This yields three possible states: acceptable (below the threshold), warning (above the threshold, but still below the hard threshold), and technical reject (above the hard threshold). In this way, a safety margin in introduced below the hard threshold:

$$THRESHOLD_{KPI_x} = MARGIN_{THRESHOLD(KPI_X)} * HARD\ THRESHOLD_{KPI_x}$$

$$wit\ 0 < MARGIN_{THRESHOLD(KPI_X)} \leq 1\ constant$$

In response to determining that all KPIs are below their corresponding threshold after the agent has taken a certain agent, the reward value is positive. The closer a KPI is located to its threshold, the higher the attributed reward is. But if a KPI exceeds its threshold ("warning" state), the system is rewarded with a negative reward. A negative reward is also referred to as a penalty.

Optionally, the KPIs are normalized by their threshold to enable faster comparisons. So, in some embodiment, a second term of the reward function is given by:

$$\sum_X REWARD\left(\frac{KPI_x}{THRESHOLD_{KPI_x}}\right)$$

where, for each KPI, the reward is positive (multiplied by a positive factor "positive reward" PR) if the threshold is kept, but negative (multiplied by a negative factor "negative reward" NR) if the threshold is exceeded:

$$REWARD(X) = \begin{cases} X * PR, & X \leq 1, PR > 0\ constant \\ X * NR, & X > 1, NR < 0\ constant \end{cases} \quad \text{with } |NR| > \sum_{KPI} PR$$

The parameters $MARGIN_{THRESHOLD(KPIx)}$, PR and NR variables are to be tuned with based on an empirical approach to obtain the wished behavior.

In summary, in some embodiments, the global reward function is defined as:

$$REWARD_{(KPI)} = PENALTY_{TR}\left(\frac{RcNbTR}{RcNbOK}\right) + \left(\sum_X REWARD\left(\frac{KPI_x}{THRESHOLD_{KPI_x}}\right)\right)$$

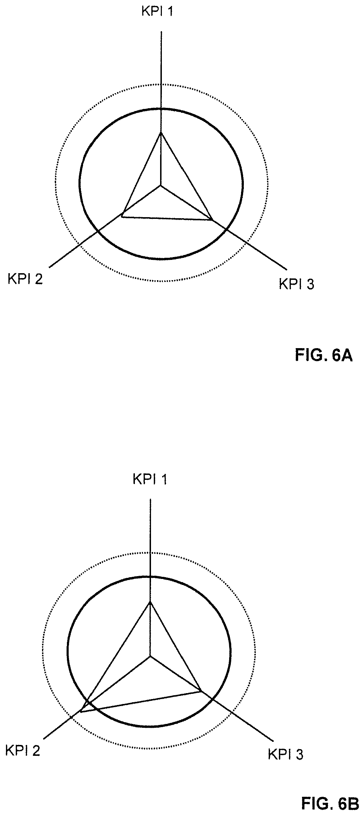

An example is given by FIG. 6. Two radars are plotted with a vector of three KPIs that are determined after a re-computation of a number of pre-computed query results according to the decision by the agent implemented in the self-tuning sub-system 6. As explained above, the KPIs are normalized by their respective allowed threshold indicated by the solid inner circle, with the hard threshold indicated by the dashed outer circle. When each KPI is below the threshold as illustrated by FIG. 6A, the resulting vector of the three KPIs (triangle completed inside the solid inner circle) is considered to be acceptable. However, if a single KPI exceeds the treshold and the resulting vector enters the corridor between the solid and the dashed circle as illustrated in Fig. 6B, the RL algorithm considers this as a warning and penalizes the indivual reward for this KPI (KPI 2 in the example of FIG. 6B).

Some particularities of the value function design to implement the computation machine 3 with the self-tuning sub-system 6 are described next. As mentioned above, the value function is a table that associates a set of N possible actions, namely the number of pre-computed query results of a share to be re-computed during the computation cycle, $W_i$, with their estimated rewards. In some embodiments, estimated rewards associated by the value function are specified by a reward function of the Reinforcement Learning algorithm, such as the reward function example described above. As described above, the reward function may attribute an aggregated value of a plurality of key performance indicators to a corresponding selection of pre-computed query results of the least one first share.

In some embodiments, the value function is computed iteratively from a history of previously received rewards (indexed with k, which represents the $k^{th}$ iteration). The value function V of re-computation number $W_i$ is therefore in some embodiments

$$V_{k+1}(W_i) = V_k(W_i) + \propto_{(k+1)}(W_i) * (REWARD_{(k+1)}(W_i) - V_k(W_i))$$

where $\propto_k(W_i)$ is the learning speed parameter (or step-size parameter) used to process the reward after the $k^{th}$ selection of the re-computation number $W_i$.

In this regard, two Reinforcement Learning formulas are used to insure a convergence of the RL algorithm. The first formula provides that the learning steps are large enough to eventually overcome any initial conditions or random fluctuations:

$$\sum_{k}^{\infty} \propto_k(W) = \infty$$

The second one is given by:

$$\sum_{k}^{\infty} \alpha_k^2(W) < \infty$$

Since the system 1 is non-stationary, i.e. the system's behavior will vary with time such that the optimal re-computation numbers will change, this second condition cannot be respected. Indeed, the system never completely converges because it needs to continually adapt to change that may occur.

In some embodiments, the learning speed parameter $\propto_k(W_i)$ is given a higher influence to the latest rewards and is adapted to the system's situation to provide further learning optimization, including the state of the environment and the mode of the RL algorithm:

- current mode: exploration or exploitation. As the decisions should be conservative in order to avoid failures, the learning should be performed less actively in exploration mode, i.e. the agent learns, but safely. Conversely, in exploitation mode, a modification of behavior has to be taken into account more quickly.
- code load indicator indicating a recent software update for the computation machine 3:
  If set to true, the system has to learn more quickly as a code load can induce quick and real KPIs variation which do not indicate any system instability.

The step-size parameter is then function of a system's situation S (k) and a $\propto$ constant:

$$\propto_k(W) = \propto * S(k)$$

where

$$S(k) = \begin{cases} 1, & Exploitation\ Mode \\ 0 < ER < 1, & Exploration\ Mode \\ CL > 1, & Code\ Load \end{cases} \quad ER, CL\ constant$$

$\propto$, *ER and CL* variables are tuned with an empirical approach (e.g. by using knowledge of a domain expert) to obtain the wished behavior.

The learning speed parameters should ensure that, in the case of one negative reward integration, the value function is not too much degraded, as it can be due to some system instability:

$$V_{k+1}(W_i) < V_k(W_i)$$

After *SN* successive negative rewards, the RL algorithm should force the system to quickly react and re-determines a new policy from where to start:

$$V_{k+SN}(W_i) < 0$$

At this stage, the certainty of the value function is questionable. It is likely that the value function for other re-computation numbers is incorrect. So, the first approach, could be to use a "brute approach" to arbitrarily set the new restart learning point to

$$re\text{-}computation \ number_{New} = DF \cdot re\text{-}computation \ number_{Old}$$

where $0 < DF < 1$ is a degradation factor.

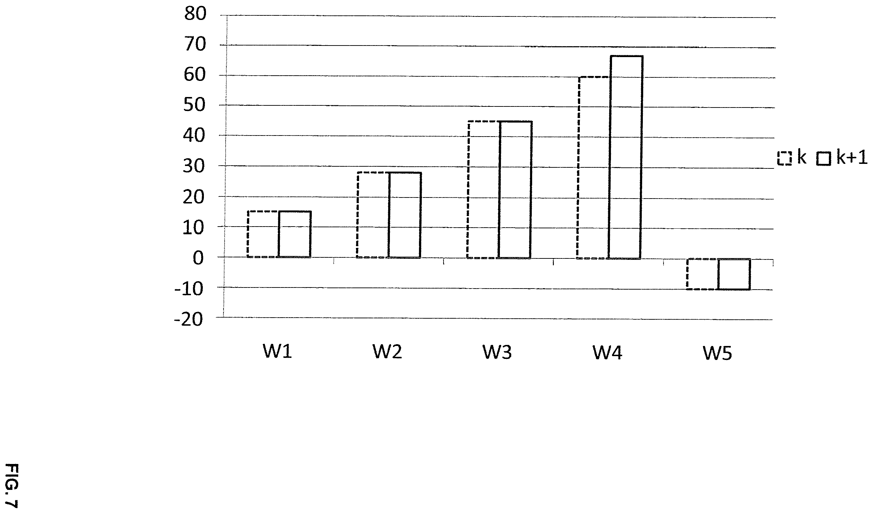

FIG. 7 shows an example of reward integration by the value function of the weight W4. The value of the reward for W4 has increased between k+1 and k selections.

In some embodiments, the request to re-compute pre-computed query results of at least a first share (= computation trigger 16 in the example of FIG. 4) estimated rewards query results of the at least first share which are to be re-computed. Re-using the non-limiting example of FIG. 3 described above, the request may include one or more origin and a destination pairs, each origin and destination pair indicating a share to be re-computed (as in the example of FIG. 3, each origin and destination pair defines a share). Furthermore, the request may indicate a departure date, multiple departure dates or a range of departure dates, as well as a stay duration, multiple stay durations or a range of stay durations. To give a particular example, the re-computation controller 2 may request the computation machine 3 to re-compute the lowest prices of all travel recommendations with origin Nice and destination Boston (idenfying the Nice-Boston share) with a departure date range of 30 days starting on 1 November 2017 and a stay duration range between 7 and 14 days (= an 8 day stay duration range), in total requesting the re-computation of 30·8 = 240 pre-computed query results forming a portion of the Nice-Boston share to be re-computed.

In these embodiments, the computation machine 3 is optionally arranged to determine the number of pre-computed query results in the first share to be re-computed based on the indicated pre-computed query results of the at least first share. For example, the computation resources of the computation machine 3 may allow to re-compute 100 pre-computed query results in the next three computation cycles. In this situation, the computation machine 3 is arranged to select an optimal number of pre-computed query results to be re-computed during the next computation cycle by splitting the portion of the first share defined by the number indicated in the request 16 into three slices, where the split results in slices which utilize the available computation resources in an optimal manner. Each of the three slices is re-computed during the next three (or three of the next) computation cycles. A further, more specific example of such split is given below.

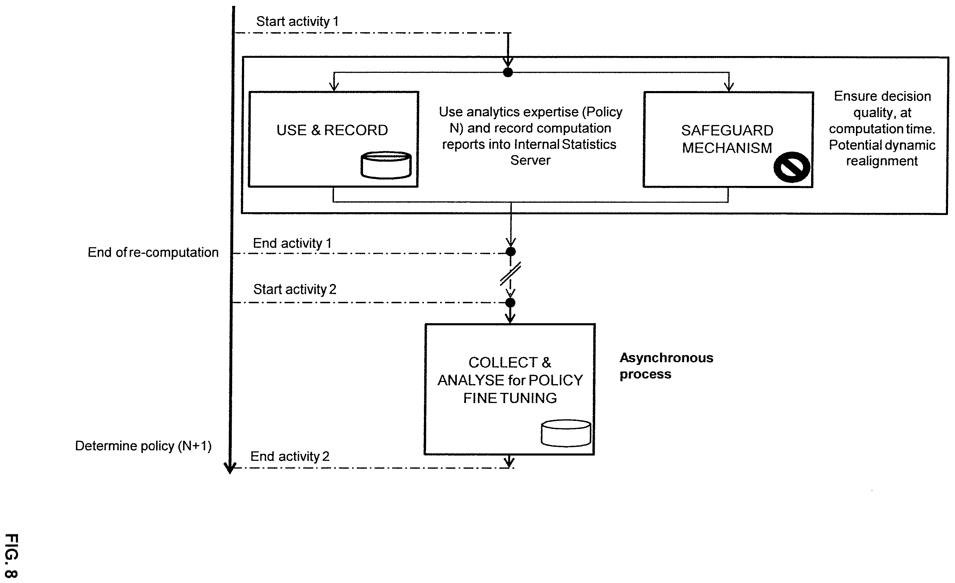

More particularities of the Reinforcement Learning algorithm design to implement the computation machine 3 with the self-tuning sub-system 6 are described next with reference to FIG. 8. In some embodiments, the re-computation number determination algorithm is composed of three main activities:

- In response to receiving a computation trigger 16 by the computation machine 3 (FIG. 8: "Start activity 1"), the agent located at the self-tuning sub-system 6 (after having been notified via interface 18) retrieves 24 from the statistics server 7 the re-computation number of each of the shares of pre-computed query results concerned which were determined at the last re-computation of the respective share.
- The agent then determines the RL mode (FIG. 8: "use & record"), i.e. chooses between exploration mode and exploitation mode. The mode determiniation is based on the value function for the retrieved last re-computation number(s) as will be described in more detail below.
- The agent also records 20 computation reports into the statistics server 7 (FIG. 8: "use & record"). Hence, in some embodiment, the computation machine 3 is arranged to store the determined number of pre-computed query results in the first share in the statistics server 7 for a subsequent determination of the number of pre-computed query results to be re-computed in a subsequent computation cycle.

- In parallel to these activities (FIG. 8: "use & record"), the agent may employ a safeguard mechanism (FIG. 8: "safeguard mechanism") in order to exclude situations in which the determinations of the agents could cause a failure state of the computation machine 3 or the overall system 1 that endangers the overall computations). For example, if such a technical issue with the self-tuning sub-system 6 is detected, the safeguard mechanism may blacklist the self-tuning sub-system 6 for one or more particular shares to be re-computed, and use a default policy (such as re-compute a given or pre-determined number of pre-computed query results of the one or more shares) which is known to work correctly.

- The agent further executes an asynchronous process (FIG. 8: "Start activity 2") to collect history data from the statistics server 7, analyze these data and fine-tunes the data basis for the decisions of the re-computation numbers.

More details of the RL mode determination are described next. As explained in the introduction on Reinforcement Learning above, a balanced tradeoff is sought between these two modes.

Two known balancing methods are the Epsilon-Greedy strategy and the Softmax strategy. The Epsilon-Greedy strategy explores new strategies a given percentage of the time, and exploites the action with the highest reward the rest of the time (greedy action). For example, the system could explore 1% of the time (by choosing at random an action among the set of possible actions) and exploit the rest (99%) of the time (use the best rated action). The Softmax strategy addresses one drawback of the Epsilon, namely exploring by equally choosing among all actions. This means that it is as likely to choose the worst-appearing action as it is to choose the next-to-best action. In tasks where the worst actions are bad, this may be disadvantageous. The Softmax strategy therefore refines the Epsilon-Greedy strategy by varying the action probabilities as a graded function of estimated value.

The balancing strategy used in some embodiments herein is different from these two known strategies. At a general level, the computation machine 3 is arranged to retrieve an indication of pre-computed query results of the at least one first share which have been re-computed in a previous time interval, i.e. the last re-computation number as explained above. The computation machine 3 is further determined to apply an exploitation mode of the Reinforcement Learning algorithm or to apply an exploration mode of the Reinforcement Learning algorithm. In some embodiments, the computation machine 3 determines to apply either the exploitation mode of the Reinforcement Learning algorithm or to apply the exploration mode of the Reinforcement Learning algorithm determining the reward given by the value function for the pre-computed query results indicated by the retrieved indication and by determining a number of re-computation cycles to apply the exploitation mode of the Reinforcement Learning algorithm based on a comparison of the determined reward with a reward threshold. In some embodiments, the reward threshold is defined by given percentages of threshold values of respective ones of the plurality of key performance indicators for which re-computation during the given time interval would result in an error state of the computation machine 3. As described below, this introduces an additional safety net avoiding technical failure states of the computation machine 3 caused by the RL algorithm. The computation machine 3 applies the exploitation mode of the Reinforcement Learning algorithm during the current re-computation cycle and subsequent re-computation cycles as given by the determined number of re-computation cycles. A more detailed example will be described below.

In response to determining to apply the exploitation mode, the computation machine 3 of some embodiments is arranged to determine the number of pre-computed query results in the first share to be re-computed in the current computation cycle based on a value function of the Reinforcement Learning algorithm for the number of pre-computed query results indicated by the retrieved indication, the value function associating possible selections of pre-computed query results in the at least first share for re-computation with respective estimated rewards.

In some embodiments, the computation machine 3 iteratively adapts the number of pre-computed query results indicated by the retrieved indication at least based on the number of pre-computed query results indicated by the retrieved indication, the value function of the Reinforcement Learning algorithm for the number of pre-computed query results indicated by the retrieved indication and the reward threshold. A more specific example how the computation machine 3 may determine a new re-computation number during the exploration mode in order to further optimize its actions is given below.

The balancing mechanism to switch between exploitation mode and exploration mode is supported by the fact that it is possible to "rank" the re-computation numbers. In other words, it uses the fact that up to a certain point, the greater the re-computation number, the greater the reward (and after some point, there is a failure). This helps to build an exploration policy: given a re-computation number that is acceptable (the KPIs are under the threshold), it can be decided to explore with a greater re-computation number (since it is known that a lower weight will not give any improvement of the reward).

It is also possible to decide how much the system can explore by using the difference between the value function of the current re-computation number and the maximum expected reward. To this end, it can be estimated how far the re-computation number is from the KPI threshold and use this estimation to decide to explore with a big or small step. This enables to reach a trade-off between the speed of convergence to the optimal re-computation number to apply to a given share and the risk of collecting low reward (in particular avoidance of technical rejects). More specifically, the following case-based RL mode determination algorithm is used in some embodiments to find to the optimal re-computation number, while keeping the system 1 stable:

1. 0 < Value function for the last re-computation number < 50% of the maximum aggregated reward resulting from all KPIs peeking at the their respective KPI threshold values (Max Reward): Exploit C1 times and then explore a given number of times (e.g. one time) with a greater re-computation number (details of choosing this greater re-computation number will be detailed below).

2. 50% < Value function for the last re-computation number < 75% of Max Reward: Exploit C2 > C1 Times and then explore one time with a greater re-computation number.

3. 5% < Value function for the last re-computation number < 90% of Max Reward: Exploit C3 > C2 Times and then explore one time with a greater re-computation number.

4. 90% < Value function for the last re-computation number < 100% of Max Reward: Exploit C4 > C3 of the time and then explore one time with a greater re-computation number.

$C1$, $C2$, C3 and C4 variables are to be tuned with an empirical approach to obtain the wished behavior (in terms of speed of convergence, for example).

In response to determining that the agent is allowed to explore in the current computation cycle, the greater re-computation number for the exploration is to be decided. It is assumed that:

- The calculated reward for a given re-computation number is better when the KPIs after the decision for the given re-computation number is closer to the KPIs threshold than for the last re-computation number.
- The reward evolution is not proportional to the re-computatoin number (sub-additivity), e.g.:

$$REWARD(2 * W) \leq 2 * REWARD(W)$$

As, in some embodiments, the system has a conservative approach to avoid failure states, the convergence towards the best re-computation for a given share is done carefully in some embodiments, step by step. In some embodiments, the new re-computation number $W_{new}$ is given by:

$$W_{new} = \frac{REWARD_{MAX}}{V_k(W_i)} \, W_i$$

where $V_k(W_i)$ is the value function of the last exploited re-computation number $W_i$. This is a strictly positive value since the current RL mode is exploration mode that has been allowed by the comparison with the maximum reward. This approach is iterately applied to determine the re-computation number for the next exploration phase. Over a multiple number of exploration phases, the respective employment of this formula in each of the exploration phases to determin $W_{new}$ forms an iterative approach bring the re-computation number closer and closer to the maximum aggregated reward REWARDmax and, thus, to select the re-computation number in an optimized manner to efficiently use the available re-computation resources.

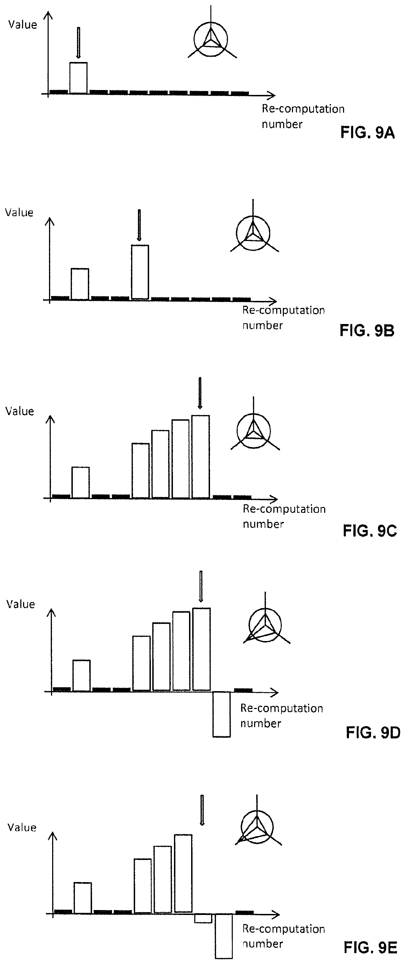

An example of this balancing selection between exploitation and exploration mode is given by FIG. 9. This example details the evolution of the value function of a given share of pre-computed query results.

Initially (FIG. 9A), when a share is to be re-computed for the first time, no previous re-computation number for the share exists. In this case, the exploration mode is selected by default. In some embodiments, the self-tuning sub-system 6 may issue a warning 14 to re-computation controller 2. The re-computation controller 2 may then include a default re-computation number in future requests 16 relating to this share. The agent selects a given conservative (i.e. relatively low) re-computation number for the share, as visualized by FIG. 9A. A reward value for this action is calculated based on the Reward Function explained in detail above. The computation machine 3 then re-computes pre-computed query results of the share in the computation cycle in accordance with the determined re-computation number. The determined re-computation number is stored in the statistics server 7.

In response to the computation machine 3 receiving another computation trigger 16 to re-computation pre-computed query results of the share in a next re-computation cycle (still FIG. 9A), the last re-computation number is retrieved from the statistics server 7. The agent then determines that the last re-computation number was below the maximum reward, for example in the range of 50-75% of the maximum reward according to above case 2. According to the balancing algorithm above, the agent determines the RL exploitation mode for C2 intervals, in the example of FIG. 9B for three more computation cycles. This ensures that the previous re-computation number is stable solution (but not a necessarily optimal choice, yet). In that case, C2 similar re-computations of the share with the same pre-computed query results of share will be performed before proceeding to a new exploration.

At the C2+1st re-computation of the share (FIG. 9B), a new exploration with a greater re-computation number determined as previously explained. This yields a greater re-computation number with a higher reward value. During following re-computations, RL exploitation mode is again selected (still FIG. 9B). This time, the reward value for the greater re-computation number is in case 3, so the next C3 re-computations of the share are done in exploitation mode. Like in FIG. 9A, this ensures that the explored re-computation number is stable.

This alternating selection of one exploration followed by a number of exploitations is subsequently iterated in the same manner to determine the optimal re-computation number for this particular share (FIG. 9C). The mode selection algorithm will enter case 4, where the number of subsequent exploitations C4 is the highest. Hence, new, potentially more optimal re-computation numbers are now explored less often than in previous iterations.

At some point of time, a newly explored re-computation number might enter the warning zone, i.e. the KPI threshold for one or more KPIs is exceeded, yielding a negative reward value (FIG. 9D). As explained before, in some embodiments, this is a warning as the threshold has been calculated a given percentage below the hard threshold. This means that the re-computation number reached (in fact, even exceeded) the phase in which not much improvement of the reward is to be expected. Hence, the re-computation number is stabilized to the latest value that yielded the best rewards. However, this stabilization only means that exploration is done less often, but not never. Indeed, it is desirable to continue exploration from time to time, as overall system is non-stationary and might change over time, e.g. as the pre-computed query results maintained by the search platform 4 change. Further exploration phase enable the system 1 to discover and catch up with those changes and developments.

FIG. 9E refers to a special situation which might indicate a degradation of the system 1 in which a reset could be suitable. Possibly reasons for a degraded performance are a sustantial change of the pre-computed query results, a change of the database scheme or model of the search platform 4, or a change of the re-computation rules, or, more general, an update of the search platform 4, of the computation machine 3 and/or of the re-computation controller resulting in a changed/refined functionality or changed pool of pre-computed query results. The term degradation indicates that the optimum re-computation number might be reduced to these changes compared with the state of the system 1 before the changes

In the scenario of FIG. 9E, multiple subsequently returned rewards for subsequently explored re-computation numbers are negative although the system 1 was stable during a certain previous amount of time. After several reward integration, the value function for the weight is still negative. The drop of the rewards to the negative values then implies that there is no other apparent reason than a possible degradation. Hence, this indicates that value function is probably incorrect or at least not suitable anymore to address the changes in the system. A new re-computation numbers is then determined by analyzing the value function for the current re-computation number to determine the new start point. For example, the self-tuning sub-system 6 may start from the given default initial value of the re-computation number as described above for the case that a share is re-computed for the first time. In another example, the self-tuning sub-system 6 may perform a "dichotomic approach", i.e. use the latest re-computation number which yielded a positive reward, and to reduce this further e.g. by dividing it e.g. by two.

Some details of the re-computation number readjustment are described next.

In some embodiments, the computation machine 3 does not have enough computation resources to re-compute a complete share or a part of the share which is requested to be re-computed by the re-computation controller 2 in a single re-computation cycle. In these embodiments, the mechanisms described herein can be employed to split the share or requested part of the share into optimal slices which are re-computed by the computation machine 3 over a plurality of computation cycles. Here, the re-computation number determined by the mechanisms described herein indicates the size of a slice to be re-computed in each cycle.

Furthermore, in some embodiments, the pre-computed query results are arranged in cells with two dimensions. One non-limiting example has already been mentioned above with reference to FIG. 3 where priced travel recommendations are pre-computed and stored in a respective share for each origin and destination pair. In this non-limiting example, the two dimensions are departure data and stay duration. In such embodiments, a re-computation number indicates a square-shaped part of the share, i.e. indicates a tuple of two numbers, one for each dimension.

The determination of the re-computation number according to the mechanisms described above would respect:

$$d = ceil(\sqrt{W}) \qquad s = floor(\frac{W}{d})$$

wherein d is the departure day range (departure on the next d days, the first dimension) and s is the stay duration range (stay duration from 1 to s days, the second dimension) and W is an optimum weight recommended by the expert knowledge database (i.e. in current state of the RL algorithm, it is thought to yield the highest reward). However, depending on the departure date range and stay duration range requested in the computation trigger 16, this solution can lead to some small re-computation number slices at the end of the (part of the) share to be re-computed.

The following algorithm provides an improved split of the part of the share to be re-computed by the computation machine 3 into slices, each of the slice is to be re-computed over a plurality of computation cycles, namely to choose a parallelogram-shaped re-computation number as follows:

- Determine a stay duration range s that is close from $\sqrt{W}$ and which splits the stay duration range indicated in the request 16 from the re-computation controller 2 well into pieces as equal as possible.
- Determine the highest possible re-computation number being a square of s · d with the less non-full slice (i.e. the last slice of the part of the share to be re-computed is closest to the re-computation number, i.e. the size of the other slices), and with s > d in order to optimize the efficient usage of computation resources (if s > d, less departure dates have to be re-computed during each computation cycle, e.g. re-computing a square of 3d · 15s is less costly than re-computing a square of 15d · 3s).

The determined numbers s and d are set to $floor\left(\frac{SR}{\sqrt{W}}\right)$, and thus have: $s = ceil(\frac{SR}{floor(\frac{SR}{\sqrt{W}})})$ and $d = floor(\frac{W}{s})$.

Implicitly, this algorithm considers that the stay duration range indicated in the request 16 is smaller than the departure date range indicated in the request and that indicated stay duration range is therefore the one that should be well split. If, on the other hand, the stay duration indicated in the request 16 is equal or greater than the departure day range, the same algorithm can be applied with exchanged indicated stay duration and indicated departure day range, and thus exchanged s and d).

As an example, the re-computation controller 2 requests the computation machine 3 to recompute a particular share for the next 31 departure days with a stay duration range of 16 (i.e. all stay durations from 1 to 16 days). Hence, overall, a square of 31 · 16 = 496 pre-computed query results has to be re-computed. The computation machine 3 has enough computation resources of re-computing 50 pre-computed query results per computation cycle.

The naive solution mentioned above would yield a re-computation number of 7d·7s = 49 which would result in 8 slices of 7d·7s, as well as 7 non-full slices, namely 4 slices of 2d·7s, 2 slices of 7d·4s, and one final slice of 2d·4s, in order to complete re-compute all 496 pre-computed query results. The average re-computation number over these 15 computation cycles is only 33. The more sophisticated approach outlined above leads to a split of 6d·8s. This results in 12 slices, namely 11 slices of 6d·8s and one remaining non-full slice of 1d·7s, and an overall average re-computation number of 41.

The above approach can be generalized to other use-cases with the pre-computed query results having other dimensions or a different number of dimensions (e.g. three dimensions).

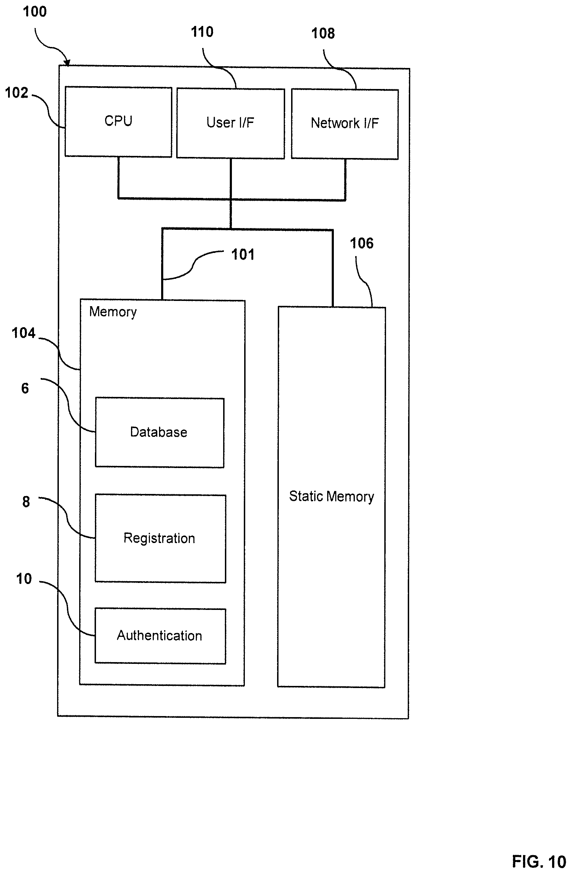

Finally, FIG. 10 is a diagrammatic example representation of a computer system 100 arranged as a computation machine 3 to execute a set of instructions, to cause the computer system 100 to perform any of the methodologies implementing the determination of an optimal re-computation number for a share in order to re-compute an optimal number of pre-computed query results during a computation cycle, as described above. The computer system 100 includes a processor 102, a main memory 104 and a network interface 108 which communicate with each other via a bus 101. The computer system 100 further includes a static memory 106, e.g. non-removable flash and/or solid-state drive and/or a removable Micro or Mini SD card, which permanently stores the instructions enabling the computer system 100 to execute its functions, in particular executing the Reinforcement Learning algorithm to select the re-computation number in response to receive a computation trigger 16. Furthermore, the computer system 100 may include a user interface 110 supported by a corresponding user interface control module.

In some examples, the instructions programmed to carry out the routines to determine the rec-computation number are also stored on the static memory 106. When the instructions are executed, process data resides in the main memory 104 and/or the processor 102. The instructions may further be transmitted or received as a propagated signal through the network interface device 108 from/to a software server within a local area network or the Internet. The network interface device 108 may be a wireless network interface (such as a Wi-Fi and/or Bluetooth interface) and/or a 2G/3G/4G/5G mobile network interface.

The mechanisms to determine an optimal re-computation number described herein increase the efficiency of re-computing pre-computed query results which are composed of a plurality of shares with a respective certain number of pre-computed query results, wherein computation resources of the computation machine needed to re-compute a pre-computed query result of a first share depend on whether or not other pre-computed query results of the first share are re-computed during a given time interval forming a current re-computation cycle. Using a Reinforcement Learning algorithm in the manner described above optimizes the usage of the computation resources of the computation machine 3 by allowing to re-compute more pre-computed query results with the same amount of computation resources than without the algorithm. The mechanisms are independent from the particular use case of the computation machine 3 and may be employed by any system which re-computes pre-computed query results having an interdependency in terms of the computation resources required to re-compute them, as exemplarily described above with reference to the example of FIG. 3.

Although certain products and methods constructed in accordance with the teachings of the invention have been described herein, this description is not intended to be construed in a limiting sense. The scope of the invention is defined by the appended claims.

**Claims**

1. A method for re-computing pre-computed query results stored at a database server (4), wherein the pre-computed query results are composed of a plurality of shares, wherein each share includes a certain number of pre-computed query results, wherein computation re-sources of a computation machine (3) needed to re-compute a pre-computed query result of a first share depend on whether or not other pre-computed query results of the first share are re-computed during a given time interval forming a current re-computation cycle, **characterized in that** the method comprises, at the computation machine (3):

   - receiving a request to re-compute pre-computed query results of the first share;
   - determining a number of pre-computed query results in the first share to be re-computed in the current re-computation cycle based on a Reinforcement Learning algorithm, the determined number of pre-computed query results being limited by the computation machine's computation resources available during the given time interval, comprising:

      o retrieving, from a statistics server (7), an indication of pre-computed query results of the first share which have been re-computed in a previous time interval;
      o determining to apply an exploitation mode of the Reinforcement Learning algorithm or to apply an exploration mode of the Reinforcement Learning algorithm based on a value function of the Reinforcement Learning algorithm for the number of pre-computed query results indicated by the retrieved indication;

   - storing the determined number of pre-computed query results in the first share in the statistics server (7) for a subsequent determination of the number of pre-computed query results to be re-computed in a subsequent computation cycle; and
   - re-computing the determined number of pre-computed query results in the first share during the re-computation cycle.

2. The method of claim 1, wherein the request to re-compute pre-computed query results of the first share indicates pre-computed query results of the first share which are to be re-computed, and the method further comprises determining the number of pre-computed query results in the first share to be re-computed based on the indicated pre-computed query results of the at least first share.

3. The method of claim 1, wherein the method further comprises computing the value function of the Reinforcement Learning algorithm iteratively from a history of previously received rewards.

4. The method of claim 1 or claim 2, wherein the method further comprises:

   - in response to determining to apply the exploitation mode, determining the number of pre-computed query results in the first share to be re-computed in the current computation cycle based on the value function of the Reinforcement Learning algorithm for the number of pre-computed query results indicated by the retrieved indication, the value function associating possible selections of pre-computed query results in the at least first share for re-computation with respective estimated rewards.

5. The method of claim 4, wherein the method further comprises specifying the estimated rewards associated by the value function by a reward function of the Reinforcement Learning algorithm which attributes an aggregated value of a plurality of key performance indicators to a corresponding selection of pre-computed query results of the least one first share.

6. The method of claim 5, wherein the aggregated value of key performance indicators is based on at least one of the following key performance indicators: sum of numbers of pre-computed query results to be re-computed, elapsed time of re-computing the pre-computed query results to be re-computed in the given time interval, maximum computation resources to re-compute pre-computed query results indicated in the request, and maximum of memory required to re-compute pre-computed query results indicated in the request.

7. The method of any one of claims 3 to 6, wherein the method further comprises determining to apply the exploitation mode of the Reinforcement Learning algorithm or to apply the exploration mode of the Reinforcement Learning algorithm by

   - determining the reward given by the value function for the pre-computed query results indicated by the retrieved indication;
   - determining a number of re-computation cycles to apply the exploitation mode of the Reinforcement Learning algorithm based on a comparison of the determined reward with a reward threshold;
   - applying the exploitation mode of the Reinforcement Learning algorithm during the current re-computation cycle and subsequent re-computation cycles given by the determined number of re-computation cycles.

8. The method of claim 7, wherein the method further comprises defining the reward threshold by given percentages of threshold values of respective ones of the plurality of key performance indicators for which re-computation during the given time interval would result in an error state of the computation machine (3).

9. The method of claim 7 or 8, wherein the method further comprises, in response to determining to apply the exploration mode, iteratively adapting the number of pre-computed query results indicated by the retrieved indication at least based on the number of pre-computed query results indicated by the retrieved indication, the value function of the Reinforcement Learning algorithm for the number of pre-computed query results indicated by the retrieved indication and the reward threshold.

10. The method of any one of claims 1 to 9, wherein the method further comprises determining a re-computation number, wherein the re-computation number is the optimal number of pre-computed query results of a share to be re-computed during a computation cycle.

11. The method of claim 10, wherein the method further comprises determining the re-com-puation number $W_{new}$ by

$$W_{new} = \frac{REWARD_{MAX}}{V_k(W_i)} \cdot W_i$$

wherein $REWARD_{MAX}$ is the maximum reward and $V_k(W_i)$ is the value function of the last exploited re-computation number $W_i$.

12. The method of any one of claims 1 to 11, wherein the method further comprises determining in response to the computation machine having insufficient computation resources

   o splitting at least a part of a complete share into slices;
   o re-computing at least the part of a complete share by the computation machine (3) over a plurality of computation cycles

13. A computation machine (3) for re-computing pre-computed query results stored at a database server (4), wherein the pre-computed query results are composed of a plurality of shares, wherein each share includes a certain number of pre-computed query results, wherein computation resources of the computation machine (3) needed to re-compute a pre-computed query result of a first share depend on whether or not other pre-computed query results of the first share are re-computed during a given time interval forming a current re-computation cycle, **characterized in that** the computation machine is arranged to:

   - receive a request to re-compute pre-computed query results of the first share;
   - determine a number of pre-computed query results in the first share to be re-computed in the current re-computation cycle based on a Reinforcement Learning algorithm, by being arranged to the determined number of pre-computed search results being limited by the computation machine's computation resources available during the given time interval, comprising:

 o retrieving, from a statistics server (7), an indication of pre-computed query results of the first share which have been re-computed in a previous time interval;
 o determining to apply an exploitation mode of the Reinforcement Learning algorithm or to apply an exploration mode of the Reinforcement Learning algorithm based on a value function of the Reinforcement Learning algorithm for the number of pre-computed query results indicated by the retrieved indication;

- store the determined number of pre-computed query results in the first share in the statistics server (7) for a subsequent determination of the number of pre-computed query results to be re-computed in a subsequent computation cycle; and
- re-compute the determined number of pre-computed query results in the first share during the re-computation cycle.

14. The computation machine (3) of claim 13 further being arranged to execute the methodology according to any one of claims 2 to 12.

15. A computer program comprising program code instructions stored on a computer readable medium to execute the method steps according to claims 1 to 12, when said program is executed on a computer (3).

**Patentansprüche**

1. Verfahren zur Neuberechnung von vorberechneten Abfrageergebnissen, die in einem Datenbankserver (4) gespeichert sind, wobei die vorberechneten Abfrageergebnisse aus mehreren Anteilen zusammengesetzt sind, wobei jeder Anteil eine bestimmte Anzahl von vorberechneten Abfrageergebnissen enthält, wobei Rechenressourcen einer Rechenmaschine (3) zum Neuberechnen eines vorberechneten Abfrageergebnisses eines ersten Anteils davon abhängen, ob andere vorberechnete Abfrageergebnisse des ersten Anteils während eines gegebenen Zeitintervalls, das einen aktuellen Neuberechnungszyklus bildet, neu berechnet werden, **dadurch gekennzeichnet, dass** das Verfahren an der Rechenmaschine (3) umfasst:

- Empfangen einer Anfrage zur Neuberechnung von vorberechneten Abfrageergebnissen des ersten Anteils;
- Bestimmen einer Anzahl von vorberechneten Abfrageergebnissen in dem ersten Anteil, die in dem aktuellen Neuberechnungszyklus neu zu berechnen sind, basierend auf einem Reinforcement-Learning-Algorithmus, wobei die bestimmte Anzahl von vorberechneten Abfrageergebnissen durch die während des gegebenen Zeitintervalls verfügbaren Rechenressourcen der Rechenmaschine begrenzt ist, umfassend:

 o Abrufen, von einem Statistikserver (7), einer Anzeige von vorberechneten Abfrageergebnissen des ersten Anteils, die in einem vorherigen Zeitintervall neu berechnet wurden;
 o Bestimmen, einen Ausnutzungsmodus des Reinforcement-Learning-Algorithmus anzuwenden oder einen Erkundungsmodus des Reinforcement-Learning-Algorithmus anzuwenden, basierend auf einer Bewertungsfunktion des Reinforcement-Learning-Algorithmus für die Anzahl von vorberechneten Abfrageergebnissen, die durch die abgerufene Anzeige angezeigt werden;

- Speichern der bestimmten Anzahl von vorberechneten Abfrageergebnissen in dem ersten Anteil in dem Statistikserver (7) für eine nachfolgende Bestimmung der Anzahl von vorberechneten Abfrageergebnissen, die in einem nachfolgenden Berechnungszyklus neu zu berechnen sind; und
- Neuberechnen der bestimmten Anzahl von vorberechneten Abfrageergebnissen in dem ersten Anteil während des Neuberechnungszyklus.

2. Verfahren nach Anspruch 1, wobei die Anfrage, vorberechnete Abfrageergebnisse des ersten Anteils neu zu berechnen, vorberechnete Abfrageergebnisse des ersten Anteils angibt, die neu zu berechnen sind, und das Verfahren ferner das Bestimmen der Anzahl der neu zu berechnenden vorberechneten Abfrageergebnisse in dem ersten Anteil auf der Grundlage der angegebenen vorberechneten Abfrageergebnisse Abfrageergebnissen des mindestens ersten Anteils umfasst.

3. Verfahren nach Anspruch 1, wobei das Verfahren ferner das iterative Berechnen der Bewertungsfunktion des Reinforcement-Learning-Algorithmus aus einer Historie von zuvor erhaltenen Belohnungen umfasst.

4. Verfahren nach Anspruch 1 oder Anspruch 2, wobei das Verfahren ferner als Antwort auf die Bestimmung, den Ausnutzungsmodus anzuwenden, das Bestimmen der Anzahl von vorberechneten Abfrageergebnissen in dem ersten Anteil, die in dem aktuellen Berechnungszyklus neu zu berechnen sind, auf der Grundlage der Bewertungsfunktion des Reinforcement-Learning-Algorithmus für die Anzahl von vorberechneten Abfrageergebnissen, die durch die abgerufene Angabe angegeben wird, umfasst, wobei die Bewertungsfunktion mögliche Auswahlen von vorberechneten Abfrageergebnissen in dem mindestens ersten Anteil zur Neuberechnung mit entsprechenden geschätzten Belohnungen verknüpft.

5. Verfahren nach Anspruch 4, wobei das Verfahren ferner das Bestimmen der geschätzten Belohnungen, die durch die Bewertungsfunktion zugeordnet sind, durch eine Vergütungsfunktion des Reinforcement-Learning-Algorithmus, die einen aggregierten Wert mehrerer Schlüsselindikatoren einer entsprechenden Auswahl von vorberechneten Abfrageergebnissen des mindestens einen Anteils zuordnet, umfasst.

6. Verfahren nach Anspruch 5, wobei der aggregierte Wert der Hauptleistungsindikatoren auf mindestens einem der folgenden Schlüsselleistungsindikatoren basiert: Summe der Anzahl der vorberechneten berechneten Abfrageergebnisse, die neu zu berechnen sind, verstrichene Zeit zur Neuberechnung der vorberechneten Abfrageergebnisse, die in dem gegebenen Zeitintervall neu zu berechnen sind, maximale Rechenressourcen für die Neuberechnung von vorberechneten Abfrageergebnissen, die in der Anfrage angegeben sind, und maximaler Speicherplatz, der für die Neuberechnung der in der Anfrage angegebenen vorberechneten Abfrageergebnisse erforderlich ist.

7. Verfahren nach einem der Ansprüche 3 bis 6, wobei das Verfahren ferner das Bestimmen der Anwendung des Ausnutzungsmodus des Reinforcement Learning Algorithmus oder der Anwendung des Erkundungsmodus des Reinforcement Learning Algorithmus umfasst, durch

   - Bestimmen der Belohnung, gegeben durch die Bewertungsfunktion für die vorberechneten Abfrageergebnisse, die durch die abgerufenen Indikationen angezeigt werden;
   - Bestimmen einer Anzahl von Neuberechnungszyklen zum Anwenden des Ausnutzungsmodus des Reinforcement Learning Algorithmus auf der Grundlage eines Vergleichs der bestimmten Belohnung mit einer Bewertungsschwelle;
   - Anwenden des Ausnutzungsmodus des Reinforcement Learning Algorithmus während des aktuellen Neuberechnungszyklus und der nachfolgenden Neuberechnungszyklen, die durch die bestimmte Anzahl von Neuberechnungszyklen bestimmt werden.

8. Verfahren nach Anspruch 7, wobei das Verfahren ferner das Bestimmen des Bewertungsschwellenwerts durch gegebene Prozentsätze von Schwellenwerten derjenigen aus mehreren Hauptleistungsindikatoren umfasst, für die eine Neuberechnung während des gegebenen Zeitintervalls zu einem Fehlerzustand der Rechenmaschine (3) führen würde.

9. Verfahren nach Anspruch 7 oder 8, wobei das Verfahren ferner als Antwort auf die Bestimmung, den Erkundungsmodus anzuwenden, das iterative Anpassen der Anzahl der durch die abgerufene Anzeige angezeigten vorberechneten Abfrageergebnisse zumindest auf der Grundlage der Anzahl der durch die abgerufene Anzeige angezeigten vorberechneten Abfrageergebnisse, der Bewertungsfunktion des Reinforcement-Learning-Algorithmus für die Anzahl der durch die abgerufene Anzeige angezeigten vorberechneten Abfrageergebnisse und der Bewertungsschwelle umfasst.

10. Verfahren nach einem der Ansprüche 1 bis 9, wobei das Verfahren ferner die Bestimmung einer Neuberechnungszahl umfasst, wobei die Neuberechnungszahl die optimale Anzahl vorberechneter Abfrageergebnisse eines Anteils ist, der während eines Berechnungszyklus neu zu berechnen ist.

11. Verfahren nach Anspruch 10, wobei das Verfahren ferner die Bestimmung der Neuberechnungszahl $W_{new}$ durch

$$W_{new} = \frac{REWARD_{MAX}}{V_k(W_i)} \, W_i$$

umfasst, wobei $REWARD_{max}$ die maximale Belohnung ist und $V_k(W_i)$ die Bewertungsfunktion der letzten ausgewerteten Neuberechnungszahl $W_i$ ist.

**12.** Verfahren nach einem der Ansprüche 1 bis 11, wobei das Verfahren ferner als Antwort darauf, dass die Rechenmaschine über unzureichende Rechenressourcen verfügt, weiter umfasst:

o Aufteilen mindestens eines Teils eines vollständigen Anteils in Tranchen;
o erneutes Berechnen zumindest des Teils eines vollständigen Anteils durch die Rechenmaschine (3) über mehrere Berechnungszyklen.

**13.** Rechenmaschine (3) zum Neuberechnen von vorberechneten Abfrageergebnissen, die in einem Datenbankserver (4) gespeichert sind, wobei die vorberechneten Abfrageergebnisse aus mehreren Anteilen zusammengesetzt sind, wobei jeder Anteil eine bestimmte Anzahl von vorberechneten Abfrageergebnissen enthält, wobei Rechenressourcen der Rechenmaschine (3), die benötigt werden, um ein vorberechnetes Abfrageergebnis eines ersten Anteils neu zu berechnen, davon abhängen, ob andere vorberechnete Abfrageergebnisse des ersten Anteils während eines gegebenen Zeitintervalls, das einen aktuellen Neuberechnungszyklus bildet, neu berechnet werden oder nicht, **dadurch gekennzeichnet, dass** die Rechenmaschine eingerichtet ist, um:

- eine Anforderung zur Neuberechnung von vorberechneten Abfrageergebnissen des ersten Anteils zu empfangen;
- eine Anzahl von vorberechneten Abfrageergebnissen in dem ersten Anteil, die in dem aktuellen Neuberechnungszyklus neu zu berechnen sind, basierend auf einem Reinforcement-Learning-Algorithmus zu bestimmen, eingerichtet auf die bestimmte Anzahl von vorberechneten Suchergebnissen, die durch die während des gegebenen Zeitintervalls verfügbaren Rechenressourcen der Rechenmaschine begrenzt ist, umfassend:

o Abrufen, von einem Statistikserver (7), einer Anzeige von vorberechneten Abfrageergebnissen des ersten Anteils, die in einem vorherigen Zeitintervall neu berechnet worden sind;
o Bestimmen, einen Ausnutzungsmodus des Reinforcement-Learning-Algorithmus anzuwenden oder einen Erkundungsmodus des Reinforcement-Learning-Algorithmus anzuwenden, basierend auf einer Bewertungsfunktion des Reinforcement-Learning-Algorithmus für die Anzahl von vorberechneten Abfrageergebnissen, die durch die abgerufene Anzeige angezeigt werden;

- die ermittelte Anzahl von vorberechneten Abfrageergebnissen im ersten Anteil im Statistikserver (7) für eine nachfolgende Bestimmung der Anzahl der vorberechneten Abfrageergebnissen, die in einem nachfolgenden Berechnungszyklus neu zu berechnen sind, zu speichern; und
- die bestimmte Anzahl von vorberechneten Abfrageergebnissen in dem ersten Anteil während des Neuberechnungszyklus neu zu berechnen.

**14.** Die Rechenmaschine (3) nach Anspruch 13, ferner eingerichtet, die Methodik nach einem der Ansprüche 2 bis 12 auszuführen.

**15.** Computerprogramm mit auf einem computerlesbaren Medium gespeicherten Programmcodebefehlen zur Ausführung der Verfahrensschritte nach einem der Ansprüche 1 bis 12, wenn das Programm auf einem Computer (3) ausgeführt wird.

**Revendications**

**1.** Méthode pour recalculer des résultats d'interrogation pré-calculés stockés au niveau d'un serveur de base de données (4),

dans laquelle les résultats d'interrogation pré-calculés sont composés d'une pluralité de partages, dans laquelle chaque partage comporte un certain nombre de résultats d'interrogation pré-calculés, dans laquelle les ressources de calcul d'une machine de calcul (3) nécessaires pour recalculer un résultat d'interrogation pré-calculé d'un premier partage dépendent du fait que d'autres résultats d'interrogation pré-calculés du premier partage sont recalculés ou non durant un intervalle de temps donné formant un cycle de recalcul courant, **caractérisée en ce que** la méthode comprend, au niveau de la machine de calcul (3) :

- la réception d'une requête de recalcul des résultats d'interrogation pré-calculés du premier partage ;
- la détermination d'un nombre de résultats d'interrogation pré-calculés dans le premier partage devant être recalculés dans le cycle de recalcul courant sur la base d'un Algorithme d'apprentissage par renforcement,

le nombre déterminé de résultats d'interrogation pré-calculés étant limité par les ressources de calcul de la machine de calcul disponibles durant l'intervalle de temps donné, comprenant :

o la récupération, à partir d'un serveur de statistiques (7), d'une indication de résultats d'interrogation pré-calculés du premier partage qui ont été recalculés dans un intervalle de temps précédent ;
o la détermination d'appliquer un mode d'exploitation de l'Algorithme d'apprentissage par renforcement ou d'appliquer un mode d'exploration de l'Algorithme d'apprentissage par renforcement sur la base d'une fonction de valeur de l'Algorithme d'apprentissage par renforcement pour le nombre de résultats d'interrogation pré-calculés indiqués par l'indication récupérée ;

- le stockage du nombre déterminé de résultats d'interrogation pré-calculés dans le premier partage dans le serveur de statistiques (7) pour une détermination ultérieure du nombre de résultats d'interrogation pré-calculés devant être recalculés dans un cycle de calcul ultérieur ; et
- le recalcul du nombre déterminé de résultats d'interrogation pré-calculés dans le premier partage durant le cycle de recalcul.

2. Méthode selon la revendication 1, dans laquelle la requête de recalcul des résultats d'interrogation pré-calculés du premier partage indique des résultats d'interrogation pré-calculés du premier partage qui doivent être recalculés, et la méthode comprend en outre la détermination du nombre de résultats d'interrogation pré-calculés dans le premier partage devant être recalculés sur la base des résultats d'interrogation pré-calculés indiqués du au moins premier partage.

3. Méthode selon la revendication 1, dans laquelle la méthode comprend en outre le calcul de la fonction de valeur de l'Algorithme d'apprentissage par renforcement de manière itérative à partir d'un historique de récompenses reçues précédemment.

4. Méthode selon la revendication 1 ou la revendication 2, dans laquelle la méthode comprend en outre :

- en réponse à la détermination d'appliquer le mode d'exploitation, la détermination du nombre de résultats d'interrogation pré-calculés dans le premier partage devant être recalculés dans le cycle de calcul courant sur la base de la fonction de valeur de l'Algorithme d'apprentissage par renforcement pour le nombre de résultats d'interrogation pré-calculés indiqués par l'indication récupérée, la fonction de valeur associant de possibles sélections de résultats d'interrogation pré-calculés dans le au moins premier partage pour un recalcul avec des récompenses estimées respectives.

5. Méthode selon la revendication 4, dans laquelle la méthode comprend en outre la spécification des récompenses estimées associées par la fonction de valeur par une fonction de récompense de l'algorithme d'apprentissage par renforcement qui attribue une valeur agrégée d'une pluralité d'indicateurs de performance clés à une sélection correspondante de résultats d'interrogation pré-calculés du au moins un premier partage.

6. Méthode selon la revendication 5, dans laquelle la valeur agrégée d'indicateurs de performance clés est basée sur au moins l'un des indicateurs de performance clés suivants : somme des nombres de résultats d'interrogation pré-calculés devant être recalculés, temps écoulé du recalcul des résultats d'interrogation pré-calculés devant être recalculés dans l'intervalle de temps donné, ressources de calcul maximales pour recalculer les résultats d'interrogation pré-calculés indiqués dans la requête, et maximum de mémoire requis pour recalculer les résultats d'interrogation pré-calculés indiqués dans la requête.

7. Méthode selon l'une quelconque des revendications 3 à 6, dans laquelle la méthode comprend en outre la détermination d'appliquer le mode d'exploitation de l'Algorithme d'apprentissage par renforcement ou d'appliquer le mode d'exploration de l'Algorithme d'apprentissage par renforcement par

- la détermination de la récompense donnée par la fonction de valeur pour les résultats d'interrogation pré-calculés indiqués par l'indication récupérée ;
- la détermination d'un nombre de cycles de recalcul pour appliquer le mode d'exploitation de l'Algorithme d'apprentissage par renforcement sur la base d'une comparaison de la récompense déterminée à un seuil de récompense ;

- l'application du mode d'exploitation de l'Algorithme d'apprentissage par renforcement durant le cycle de recalcul courant et les cycles de recalcul ultérieurs donnés par le nombre déterminé de cycles de recalcul.

8. Méthode selon la revendication 7, dans laquelle la méthode comprend en outre la définition du seuil de récompense par des pourcentages donnés de valeurs de seuil d'indicateurs respectifs parmi la pluralité d'indicateurs de performance clés pour lesquels un recalcul durant l'intervalle de temps donné résulterait en un état d'erreur de la machine de calcul (3).

9. Méthode selon la revendication 7 ou 8, dans laquelle la méthode comprend en outre, en réponse à la détermination d'appliquer le mode d'exploration, l'adaptation de manière itérative du nombre de résultats d'interrogation pré-calculés indiqués par l'indication récupérée au moins sur la base du nombre de résultats d'interrogation pré-calculés indiqués par l'indication récupérée, de la fonction de valeur de l'Algorithme d'apprentissage par renforcement pour le nombre de résultats d'interrogation pré-calculés indiqués par l'indication récupérée et du seuil de récompense.

10. Méthode selon l'une quelconque des revendications 1 à 9, dans laquelle la méthode comprend en outre la détermination d'un nombre de recalculs, dans laquelle le nombre de recalculs est le nombre optimal de résultats d'interrogation pré-calculés d'un partage devant être recalculés durant un cycle de calcul.

11. Méthode selon la revendication 10, dans laquelle la méthode comprend en outre la détermination du nombre de recalculs $W_{nouveau}$ par

$$W_{nouveau} = RÉCOMPENSE_{MAX} \; / \; V_k \; (W_i) \; \cdot \; W_i$$

dans laquelle $RÉCOMPENSE_{MAX}$ est la récompense maximale et $V_k(W_i)$ est la fonction de valeur du dernier nombre de recalculs exploités $W_i$.

12. Méthode selon l'une quelconque des revendications 1 à 11, dans laquelle la méthode comprend en outre la détermination, en réponse à la machine de calcul ayant des ressources de calcul insuffisantes

    o d'une division d'au moins une partie d'un partage complet en tranches ;
    o d'un recalcul d'au moins la partie d'un partage complet par la machine de calcul (3) sur une pluralité de cycles de calcul.

13. Machine de calcul (3) pour recalculer des résultats d'interrogation pré-calculés stockés au niveau d'un serveur de base de données (4), dans laquelle les résultats d'interrogation pré-calculés sont composés d'une pluralité de partages, dans laquelle chaque partage comporte un certain nombre de résultats d'interrogation pré-calculés, dans laquelle les ressources de calcul de la machine de calcul (3) nécessaires pour recalculer un résultat d'interrogation pré-calculé d'un premier partage dépendent du fait que d'autres résultats d'interrogation pré-calculés du premier partage sont recalculés ou non durant un intervalle de temps donné formant un cycle de recalcul courant, **caractérisée en ce que** la machine de calcul est agencée pour :

    - recevoir une requête de recalcul de résultats d'interrogation pré-calculés du premier partage ;
    - déterminer un nombre de résultats d'interrogation pré-calculés dans le premier partage devant être recalculés dans le cycle de recalcul courant sur la base d'un Algorithme d'apprentissage par renforcement, en étant agencée par rapport au nombre déterminé de résultats de recherche pré-calculés étant limité par les ressources de calcul de la machine de calcul disponibles durant l'intervalle de temps donné, comprenant :

        o la récupération, à partir d'un serveur de statistiques (7), d'une indication de résultats d'interrogation pré-calculés du premier partage qui ont été recalculés dans un intervalle de temps précédent ;
        o la détermination d'appliquer un mode d'exploitation de l'Algorithme d'apprentissage par renforcement ou d'appliquer un mode d'exploration de l'Algorithme d'apprentissage par renforcement sur la base d'une fonction de valeur de l'Algorithme d'apprentissage par renforcement pour le nombre de résultats d'interrogation pré-calculés indiqués par l'indication récupérée ;

    - stocker le nombre déterminé de résultats d'interrogation pré-calculés dans le premier partage dans le serveur de statistiques (7) pour une détermination ultérieure du nombre de résultats d'interrogation pré-calculés devant être recalculés dans un cycle de calcul ultérieur ; et

- recalculer le nombre déterminé de résultats d'interrogation pré-calculés dans le premier partage durant le cycle de recalcul.

14. Machine de calcul (3) selon la revendication 13 étant en outre agencée pour exécuter la méthodologie selon l'une quelconque des revendications 2 à 12.

15. Programme informatique comprenant des instructions de code de programme stockées sur un support lisible par ordinateur pour exécuter les étapes de méthode selon les revendications 1 à 12, lorsque ledit programme est exécuté sur un ordinateur (3).

FIG. 1

EP 3 743 823 B1

FIG. 2

26

Computation resources in dependency of number of pre-computed flight records

FIG. 3

EP 3 743 823 B1

FIG. 4

FIG. 5

KPI 1

KPI 2　　　　　　KPI 3

**FIG. 6A**

KPI 1

KPI 2　　　　　　KPI 3

**FIG. 6B**

FIG. 7

FIG. 8

FIG. 9A

FIG. 9B

FIG. 9C

FIG. 9D

FIG. 9E

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2913764 A

- FR 123